# EUROPÄISCHE PATENTSCHRIFT

(11) **EP 4 269 805 B1**
(45) Veröffentlichungstag und Bekanntmachung des Hinweises auf die Patenterteilung: **09.12.2026**
(21) Anmeldenummer: 23196861.1
(22) Anmeldetag: 12.09.2023
(51) Int. Cl.: F04D 19/04

(54) **VAKUUMPUMPE**
VACUUMPUMP
POMPE À VIDE

(43) Veröffentlichungstag der Anmeldung: 01.11.2023
(73) Patentinhaber: Pfeiffer Vacuum Technology AG, 35614 Asslar (DE)
(72) Erfinder: MEKOTA, Mirko, 35630 Ehringshausen (DE); KOCH, Bernhard, 35619 Braunfeld (DE)
(74) Vertreter: Manitz Finsterwald Patent- und Rechtsanwaltspartnerschaft mbB

(56) Entgegenhaltungen:
- EP-A2- 3 808 988
- JP-A- 2002 147 454
- JP-A- 2005 325 976
- JP-A- 2007 270 829
- US-A1- 2005 186 099

## Beschreibung

Die Erfindung betrifft eine Vakuumpumpe, insbesondere Turbomolekular-Vakuumpumpe, mit einem Stator, einem bezüglich des Stators um eine Rotationsachse drehbaren Rotor, einer Lagereinheit mit mindestens einem elektromagnetischen Lager zur kontaktfreien Drehlagerung des Rotors bezüglich des Stators, mindestens einem Abstandssensor, der dazu ausgebildet ist, während des Betriebs einen Abstand zwischen dem Rotor und dem Stator zu messen, und einer Steuereinheit, die dazu ausgebildet ist, auf der Grundlage eines von dem Abstandssensor bereitgestellten Abstandsmesswerts eine Maßnahme zu ergreifen.

Eine derartige Vakuumpumpe ist grundsätzlich bekannt, wie zum Beispiel aus der JP 2002 147454 A, US 2005 / 186099 A1, JP 2007 270829 A oder JP 2005 325976 A, und dient üblicherweise zur Evakuierung eines Rezipienten mit Hilfe des während des Betriebs der Vakuumpumpe in Drehung versetzten Rotors. Während des Betriebs wird die Lage des Rotors relativ zum Stator regelmäßig mit Hilfe des Abstandssensors erfasst und durch die mit dem Abstandssensor verbundene Steuereinheit auf der Grundlage der erfassten Abstandsmesswerte permanent nachgeregelt. Dies kann beispielsweise durch gezieltes Bestromen einer Spule des elektromagnetischen Lagers erfolgen. Durch die hierbei erzeugten elektromagnetischen Anziehungskräfte wird der Rotor auf Abstand zu dem Stator gehalten. Grundsätzlich ist es auch denkbar, den Rotor durch elektromagnetische Abstoßungskräfte auf Abstand zu dem Stator zu halten. Die elektromagnetischen Kräfte wirken dabei aber nicht nur auf den Rotor, sondern aufgrund des Gegenwirkungsprinzips auch auf den restlichen Teil der Vakuumpumpe. Hierdurch wird die Vakuumpumpe insgesamt in Bewegung versetzt. Darüber hinaus erzeugt auch ein zum Antreiben des Rotors verwendeter Motor während des Betriebs der Vakuumpumpe Kräfte, welche die Vakuumpumpe in Bewegung versetzen.

Derartige Bewegungen der Vakuumpumpe, insbesondere hierdurch hervorgerufene Schwingungen, wirken sich nachteilig auf die Laufruhe der Vakuumpumpe aus und können sich auch auf den mit der Vakuumpumpe verbundenen Rezipienten übertragen, was gerade bei schwingungssensitiven Anwendungen unerwünscht ist. Beispielsweise können die Bewegungen der Vakuumpumpe bei einem Elektronenmikroskop Bildstörungen hervorrufen.

Es ist daher eine Aufgabe der vorliegenden Erfindung, eine möglichst laufruhige Vakuumpumpe zu schaffen.

Die Aufgabe wird durch eine Vakuumpumpe, ein Vakuumsystem sowie durch ein Verfahren gemäß den unabhängigen Ansprüchen gelöst.

Der Erfindung liegt der Gedanke zugrunde, mit Hilfe eines Bewegungssensors eine Bewegung der Vakuumpumpe oder eine von der Vakuumpumpe hervorgerufene Bewegung zu erfassen und unter Berücksichtigung der erfassten Bewegung eine Maßnahme zu ergreifen, die zu einer Verringerung der Vakuumpumpenbewegung führt. Hierdurch wird die Laufruhe der Vakuumpumpe verbessert.

Die vom Bewegungssensor erfasste Bewegung betrifft vorzugsweise eine Bewegung der gesamten Vakuumpumpe. Es handelt sich insbesondere nicht um die Bewegungserfassung einzelner beweglicher Teile der Vakuumpumpe, wie zum Beispiel des Rotors.

Der Bewegungssensor kann die Bewegung der Vakuumpumpe von einer von der Vakuumpumpe nicht selbst verursachten Hintergrundbewegung unterscheiden, indem der Bewegungssensor die Hintergrundbewegungen bei inaktiver Vakuumpumpe, insbesondere bei stehendem Rotor, erfasst. Dies kann beispielsweise vor oder nach dem Betrieb der Vakuumpumpe erfolgen. Die Hintergrundbewegungen, insbesondere periodische Hintergrundbewegungen, können von der Gesamtheit der erfassten Bewegungen herausgerechnet werden, um die Bewegung der Vakuumpumpe zu bestimmen.

Vorzugsweise handelt es sich bei der Vakuumpumpe um eine Vakuumpumpe mit dreiachsiger, vorzugsweise fünfachsiger, elektromagnetischer Lagerung des Rotors. Bei der dreiachsigen Lagerung ist der Rotor sowohl in Richtung dessen Längsachse bzw. Rotationsachse als auch in einer ersten Ebene in Richtung zweier zueinander orthogonal sowie orthogonal zur Rotorlängsachse ausgerichteter Achsen elektromagnetisch gelagert. Bei der fünfachsigen Lagerung ist der Rotor zusätzlich noch in einer zweiten Ebene in Richtung zweier zueinander orthogonal sowie orthogonal zur Rotorlängsachse ausgerichteter Achsen elektromagnetisch gelagert, wobei die zweite Ebene zu der ersten Ebene in Richtung der Rotorlängsachse beabstandet ist. Eine Vakuumpumpe mit fünfachsiger Rotorlagerung wird auch als Vakuumpumpe mit vollmagnetischer Rotorlagerung bezeichnet.

Bevorzugt wird der Abstand zwischen dem Rotor und dem Stator in Richtung mindestens einer der Lagerachsen überwacht. So kann mindestens ein Abstandssensor einen axialen Abstand zwischen dem Rotor und dem Stator in Richtung parallel zu der Rotorlängsachse erfassen. Zusätzlich oder alternativ kann mindestens ein Abstandssensor vorgesehen sein, um einen radialen Abstand zwischen dem Rotor und dem Stator rechtwinklig zur Rotorlängsachse zu erfassen. Insbesondere kann jeder der beiden orthogonal zur Rotorlängsachse ausgerichteten Achsen einer Ebene ein radialer Abstandssensor zugeordnet sein. Eine besonders genaue Messung der radialen Rotorauslenkung lässt sich dadurch erreichen, wenn in jeder der beiden orthogonal zur Rotorlängsachse ausgerichteten Achsen einer Ebene jeweils zwei Abstandssensoren auf gegenüberliegenden Seiten des Rotors angeordnet sind.

Vorzugsweise sind zwei den radialen Abstand erfassende Abstandssensoren in Richtung der Rotorlängsachse zueinander beabstandet, um eine Verkippung des Rotors zu erfassen.

Weitere vorteilhafte Ausbildungen der Erfindung sind den Unteransprüchen, der Beschreibung und den Zeichnungen zu entnehmen.

Eine von der Steuereinheit ergriffene Maßnahme besteht erfindungsgemäß darin, eine Drehgeschwindigkeit des Rotors zu ändern. Durch Änderung der Rotordrehgeschwindigkeit können schwingungsanregende Resonanzfrequenzen vermieden werden.

Zusätzlich oder alternativ kann eine Maßnahme darin bestehen, den Rotor in eine Normallage oder zumindest in einen die Normallage beinhaltenden Toleranzbereich zurückzuführen. Der Toleranzbereich ist vorzugsweise durch einen vorgegebenen oder vorgebbaren minimal zulässigen Abstandswert sowie einen vorgegebenen oder vorgebbaren maximal zulässigen Abstandswert festgelegt.

Eine Rückführung des Rotors in dessen Normallage bzw. in den Toleranzbereich kann beispielsweise durch gezieltes bestromen einer Spule der Lagereinheit erfolgen.

Vorzugsweise erfolgt die Rückführung des Rotors in dessen Normallage durch Minimierung des Bewegungsmesswerts. Mit anderen Worten wird der Rotor durch die Minimierung des von dem Bewegungssensor gemessenen Bewegungswertes in eine besonders laufruhige Normallage gebracht. Befindet sich der Rotor in dieser Lage, so sind nur noch geringfügige oder bestenfalls keine Rückstellkräfte erforderlich, um den Rotor in seiner Normallage zu halten. Dies macht sich insgesamt in einer geringeren Bewegung der Vakuumpumpe bemerkbar. Da der Rotor in seiner Normallage besonders laufruhig rotiert, kann hierbei auch von einer Rotorwuchtung gesprochen werden.

Der Abstandssensor kann bei der eben beschriebenen Rotorwuchtung eine überwachende Funktion übernehmen. Insbesondere ist anhand eines Vergleichs des vom Abstandssensor aktuell gemessenen Abstandsmesswerts mit einem die Normallage repräsentierenden Referenzabstandswert erkennbar, ob sich der Rotor der Normallage nähert, sich von dort entfernt oder sich bereits in der Normallage befindet. Befindet sich der Rotor in seiner Normallage, sind der gemessene Abstandsmesswert und der Referenzabstandswert identisch.

Eine Minimierung der Vakuumpumpenbewegung kann insbesondere durch wiederholtes Erfassen des Bewegungsmesswerts und Vergleichen des aktuell erfassten Bewegungsmesswerts mit einem vorgebbaren Maximalbewegungswert erfolgen. Gegebenenfalls kann dabei ein wiederholtes Erfassen des Abstandsmesswerts und Vergleichen des erfassten Abstandsmesswerts mit einem eine Normallage des Rotors repräsentierenden Referenzabstandswertes vorgesehen sein. Eine der vorstehend genannten Maßnahmen wird so lange ergriffen, d.h. fortgeführt, bis der Bewegungsmesswert geringer ist als der vorgegebene Maximalbewegungswert, und/oder bis der erfasste Abstandsmesswert näher an dem Referenzabstandswert liegt als ein zuvor erfasster Abstandsmesswert oder der erfasste Abstandsmesswert dem Referenzabstandswert entspricht.

Entsprechend der vorstehend beschriebenen Vorgehensweise ist die Steuereinheit grundsätzlich bestrebt, den Rotor in seine Normallage zurückzuführen. Zur Verringerung der Bewegung der Vakuumpumpe kann eine Maßnahme aber auch darin bestehen, eine stärkere Abweichung des Rotors von dessen Normallage, insbesondere innerhalb des Toleranzbereichs, zuzulassen. Die elektromagnetischen Lager sind dabei weniger aktiv, so dass weniger Rückstellkräfte auf den Rotor und die restlichen Teile, insbesondere das Gehäuse, der Vakuumpumpe wirken, wodurch die Bewegung der Vakuumpumpe insgesamt geringer ist.

Zur Minimierung der Vakuumpumpenbewegung kann hierbei ein wiederholtes Erfassen des Bewegungsmesswerts und Vergleichen des erfassten Bewegungsmesswerts mit einem vorgebbaren Maximalbewegungswert vorgesehen sein. Die Maßnahme wird solange fortgeführt, bis der erfasste Bewegungsmesswert den Maximalbewegungswert erreicht oder unterschreitet.

Zum Schutz der Vakuumpumpe kann außerdem ein wiederholtes Erfassen des Abstandsmesswerts und Vergleichen des erfassten Abstandsmesswerts mit dem minimalen Abstandswert und/oder dem maximalen Abstandswert vorgesehen sein. Bei Erreichen oder Unterschreiten des minimalen Abstandswerts bzw. bei Erreichen oder Überschreiten des maximalen Abstandswertes wird die Maßnahme nur noch auf der Grundlage des Abstandsmesswerts ergriffen. Die Messung des Abstands dient demnach zur Überwachung, ob sich der Rotor innerhalb des zulässigen Toleranzbereichs befindet. Hierdurch wird vermieden, dass die Vakuumpumpe Schaden nimmt, beispielsweise indem der Rotor derart stark ausgelenkt wird, dass dieser mit dem Stator in Kontakt gelangt. Befindet sich der Rotor dagegen innerhalb des Toleranzbereichs, so wird die Ergreifung der Maßnahme unter Berücksichtigung des Abstandswerts zugunsten der Bewegungsminimierung vernachlässigt.

Zur Erfassung der Vakuumpumpenbewegung kann der Bewegungssensor dazu ausgebildet sein, eine Auslenkungsstärke und/oder eine Bewegungsrichtung der Bewegung zu erfassen. Der Bewegungsmesswert kann somit die Auslenkungsstärke und/oder die Bewegungsrichtung beinhalten.

Auf der Grundlage der erfassten Bewegungsrichtung kann eine Maßnahme darin bestehen, durch Auslenkung des Rotors eine zur erfassten Bewegungsrichtung gegenläufige Bewegung der Vakuumpumpe hervorzurufen. Die hervorgerufene gegenläufige Bewegung weist idealerweise eine gleich große Auslenkungsstärke auf wie die erfasste Bewegungsstärke. Insgesamt kann durch die Gegenbewegung infolge der gezielten Auslenkung des Rotors die Bewegung der Vakuumpumpe verringert oder vollständig neutralisiert werden.

Vorteilhafterweise kann die Steuereinheit anhand der erfassten Bewegungsmesswerte ein Bewegungsmuster, insbesondere ein periodisches Bewegungsmuster, erstellen und den Rotor ähnlich wie bei einer aktiven Geräuschunterdrückung ("active noise cancellation") derart auslenken, dass die durch den gezielt ausgelenkten Rotor erzeugte Gegenbewegung eine Bewegung der Vakuumpumpe durch destruktive Interferenz minimiert oder vollständig neutralsiert.

Es versteht sich, dass die Auslenkung des Rotors zur Erzeugung der Gegenbewegung innerhalb eines jeweils zulässigen Toleranzbereichs erfolgt.

Zur Messung der Vakuumpumpenbewegung ist der Bewegungssensor vorzugsweise an der Vakuumpumpe angebracht oder anbringbar, insbesondere an einem beliebigen statorseitigen Bauteil der Vakuumpumpe. Der Bewegungssensor kann dabei im Inneren, insbesondere im Vakuumbereich, oder an einer Außenseite der Vakuumpumpe angebracht oder anbringbar sein.

Als besonders bevorzugter Anbringungsort für den Bewegungssensor eignet sich eine Verbindungsstelle der Vakuumpumpe, mittels welcher die Vakuumpumpe mit einem weiteren Vakuumgerät, wie zum Beispiel einem Rezipienten oder einer weiteren Vakuumpumpe verbindbar ist. Eine Bewegungsmessung an dieser Stelle ist besonders vorteilhaft, da ab hier möglichst keine Bewegung auf das weitere Vakuumgerät übertragen werden soll. Eine beispielhafte Verbindungsstelle der Vakuumpumpe ist der Einlassflansch.

Zusätzlich oder alternativ kann der Bewegungssensor auf einer Platine vorgesehen sein, insbesondere auf einer in der Vakuumpumpe bereits vorhandenen Platine, wie zum Beispiel einer die Steuerung der Vakuumpumpe tragenden Platine. Vorzugsweise kann eine bereits vorhandene Platine mit dem Bewegungssensor nachgerüstet werden. Die Platine kann in einer Vakuumdurchführung integriert sein.

Vorzugsweise sind mehrere zueinander beabstandete Bewegungssensoren vorgesehen, um die Bewegung der Vakuumpumpe an unterschiedlichen Stellen zu erfassen. Die Bewegungssensoren können dabei so ausgerichtet sein, dass sie Bewegungen in derselben Richtung oder in verschiedenen Richtungen messen können.

Als Bewegungssensor kann ein beliebiger Sensor aus der Gruppe bereits bekannter Bewegungssensoren verwendet werden. Gemäß einer besonders einfach und kostengünstig zu realisierenden Ausgestaltung kann der Bewegungssensor Bewegungen in einer Raumrichtungen erfassen. Für eine umfangreichere Erfassung der Vakuumpumpenbewegung kann der Bewegungssensor Bewegungen in mehreren Raumrichtungen, insbesondere in drei orthogonal zueinander ausgerichteten Raumrichtungen, erfassen. Der Bewegungssensor kann auch einen Inertialsensor umfassen, wie zum Beispiel einen Beschleunigungssensor oder einen Drehratensensor. Dabei wird die Bewegung der Vakuumpumpe durch Integration der vom Inertialsensor erfassten Beschleunigungsmesswerte erhalten.

Der Bewegungssensor kann kostengünstig als mikro-elektronisch-mechanisches System (MEMS) ausgebildet sein.

Die Erfindung betrifft auch ein Vakuumsystem mit einer wie vorstehend beschriebenen Vakuumpumpe und einem Vakuumgerät, wobei die Vakuumpumpe mit dem Vakuumgerät vakuumtechnisch verbunden ist und der Bewegungssensor an dem Vakuumgerät angebracht oder anbringbar ist. Hierdurch ist die von der Vakuumpumpe hervorgerufene Bewegung dort erfassbar, wo sie vermieden werden soll; nämlich am Vakuumgerät, wie zum Beispiel einem zu evakuierenden Rezipienten oder einer weiteren Vakuumpumpe, insbesondere der vorstehend beschriebenen Art.

Die Bewegung der Vakuumpumpe kann demnach vorteilhafterweise so minimiert werden, dass an dem mit der Vakuumpumpe verbundenen Vakuumgerät keine oder allenfalls nur noch vernachlässigbare Bewegungen auftreten.

Der an dem weiteren Vakuumgerät angebrachte oder anbringbare Bewegungssensor kann zusätzlich oder alternativ zu einem an der Vakuumpumpe angebrachten oder anbringbaren Bewegungssensor vorgesehen sein.

Eine Kommunikation zwischen dem Bewegungssensor und der Steuereinheit ist kabelgebunden oder kabellos möglich.

Handelt es sich bei dem weiteren Vakuumgerät um eine ebenfalls einen Rotor aufweisende Vakuumpumpe, können mit Hilfe des Bewegungssensors oder der Bewegungssensoren Resonanzerscheinungen zwischen den Vakuumpumpen erkannt und durch Ergreifen einer der vorstehend beschriebenen Maßnahmen unterdrückt werden. Insbesondere können Resonanzerscheinungen durch Anpassung mindestens einer Rotordrehgeschwindigkeit und/oder durch Reduzierung der Rotorschwingung durch gezielte Ansteuerung der elektromagnetischen Lager unterdrückt werden.

Die Erfindung befasst sich außerdem mit einem Verfahren zum Betreiben einer wie vorstehend beschriebenen Vakuumpumpe bzw. zum Betreiben eines wie vorstehend beschriebenen Vakuumsystems.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer aus dem Stand der Technik bekannten Turbomolekular-Vakuumpumpe,
- Fig. 2: eine Ansicht der Unterseite der Turbomolekular-Vakuumpumpe von Fig. 1,
- Fig. 3: einen Querschnitt der Turbomolekular-Vakuumpumpe längs der in Fig. 2 gezeigten Schnittlinie A-A,
- Fig. 4: eine Querschnittsansicht der Turbomolekular-Vakuumpumpe längs der in Fig. 2 gezeigten Schnittlinie B-B,
- Fig. 5: eine Querschnittsansicht der Turbomolekular-Vakuumpumpe längs der in Fig. 2 gezeigten Schnittlinie C-C,
- Fig. 6: eine Querschnittansicht einer Turbomolekular-Vakuumpumpe gemäß einer Variante der in den Fig. 1 bis 5 gezeigten Turbomolekular-Vakuumpumpe mit einem ersten Anbringungsort für einen Bewegungssensor gemäß der Erfindung,
- Fig. 7: eine Querschnittansicht der Turbomolekular-Vakuumpumpe von Fig. 6 mit einem zweiten Anbringungsort für den Bewegungssensor gemäß der Erfindung,
- Fig. 8: eine Querschnittansicht der Turbomolekular-Vakuumpumpe von Fig. 6 mit einem dritten Anbringungsort für den Bewegungssensor gemäß der Erfindung, und
- Fig. 9: eine Querschnittansicht der mit einem Rezipienten verbundenen Turbomolekular-Vakuumpumpe von Fig. 6 mit einem vierten Anbringungsort für den Bewegungssensor gemäß der Erfindung.

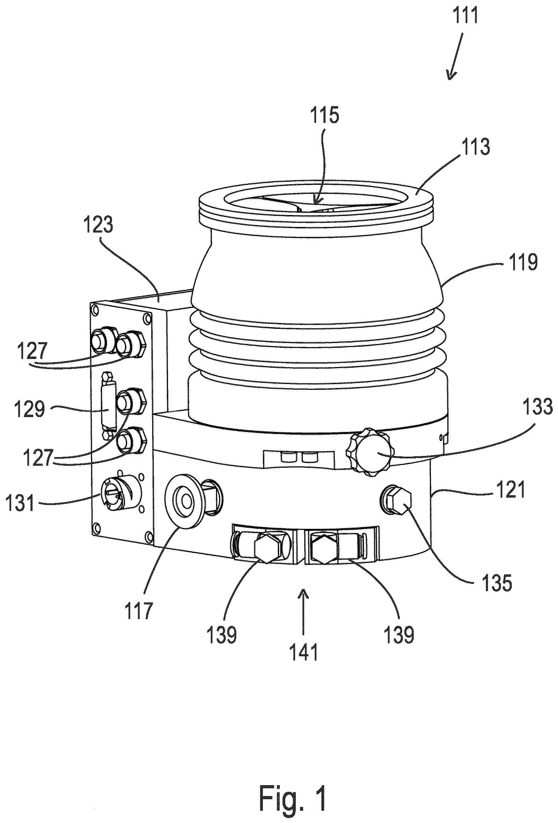

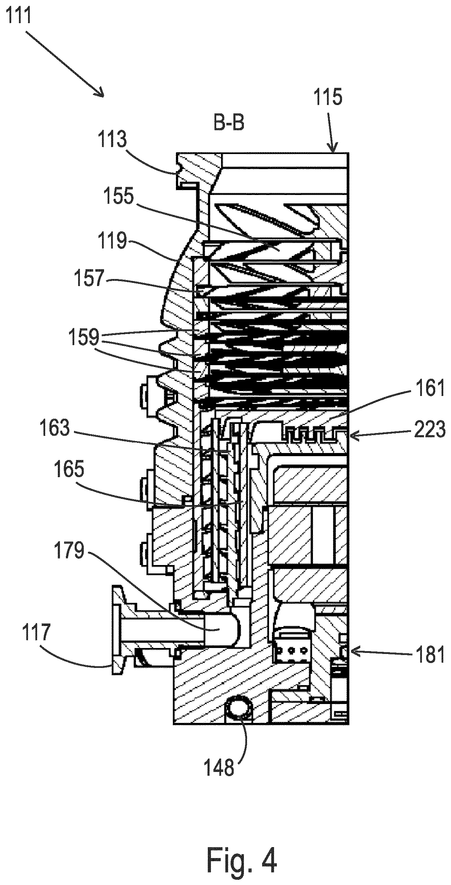

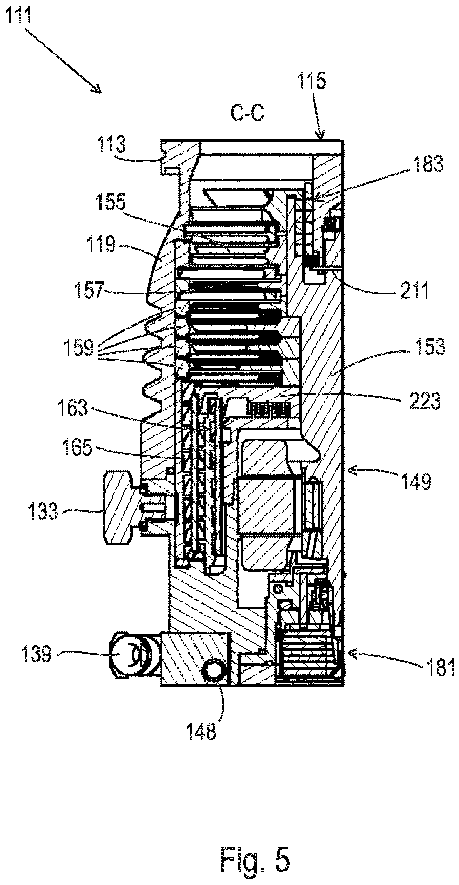

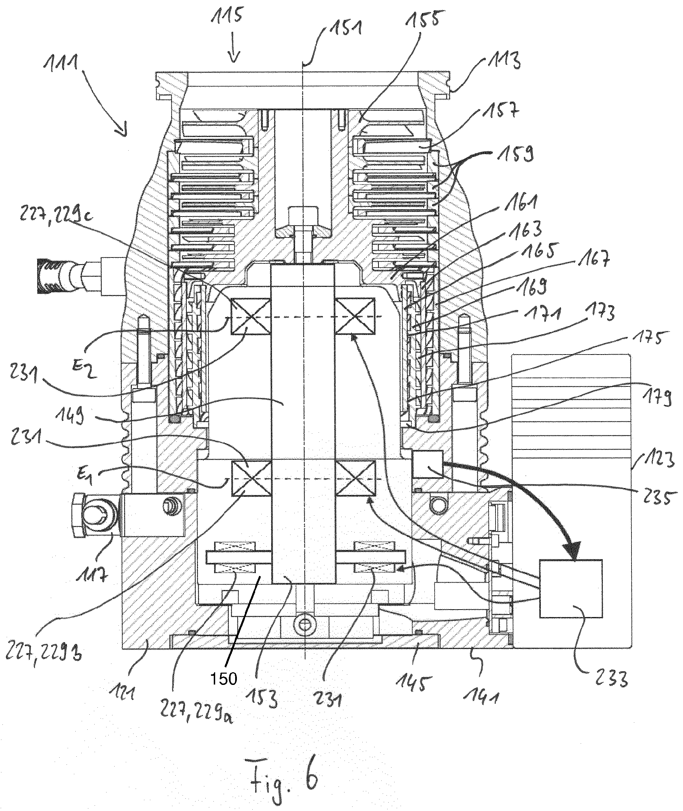

Die im Zusammenhang mit den Fig. 1 bis 5 beschriebene bekannte Vakuumpumpe ist bis auf die Lagerung des Rotors ähnlich zu den in Fig. 6 bis 9 gezeigten erfindungsgemäßen Vakuumpumpen, so dass die nachfolgend im Zusammenhang mit Fig. 1 bis 5 beschriebenen Eigenschaften grundsätzlich auch für die in Fig. 6 bis 9 gezeigten Vakuumpumpen gelten.

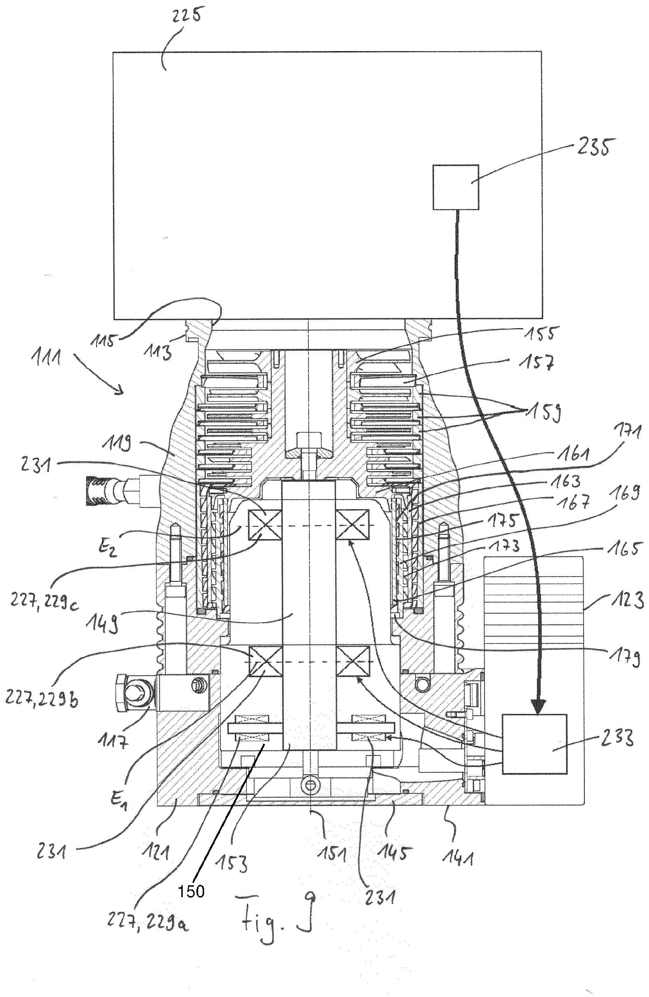

Fig. 1 zeigt eine Vakuumpumpe in Form einer Turbomolekular-Vakuumpumpe 111, die im Folgenden auch kurz als Turbomolekularpumpe 111 oder einfach nur Vakuumpumpe 111 bezeichnet wird. Die in Fig. 1 gezeigte Turbomolekularpumpe 111 umfasst einen von einem Einlassflansch 113 umgebenen Pumpeneinlass 115, an welchen in an sich bekannter Weise ein Rezipient 225 angeschlossen werden kann (Fig. 9). Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

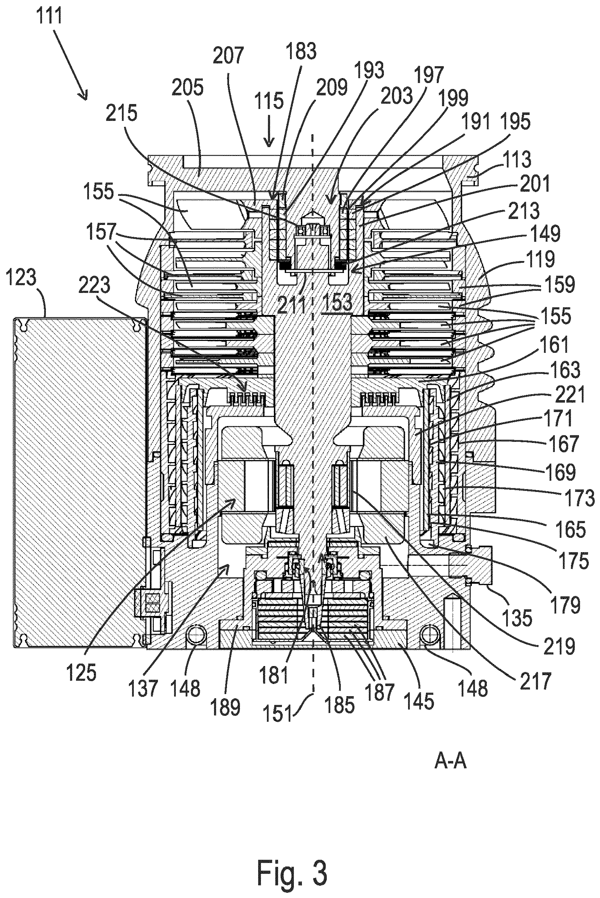

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125 (vgl. auch Fig. 3). Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Es existieren auch Turbomolekularpumpen, die kein derartiges angebrachtes Elektronikgehäuse aufweisen, sondern an eine externe Antriebselektronik angeschlossen werden.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, eingelassen werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann. Andere existierende Turbomolekularvakuumpumpen (nicht dargestellt) werden ausschließlich mit Luftkühlung betrieben.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten 225 befestigt werden und somit gewissermaßen hängend betrieben werden (Fig. 9). Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann. Grundsätzlich sind dabei beliebige Winkel möglich.

Andere existierende Turbomolekularvakuumpumpen (nicht dargestellt), die insbesondere größer sind als die hier dargestellte Pumpe, können nicht stehend betrieben werden.

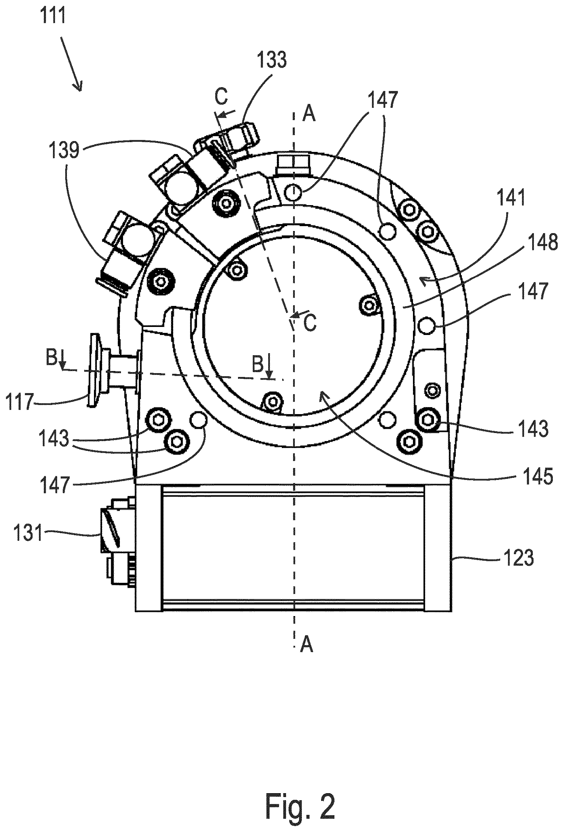

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann. Dies ist bei anderen existierenden Turbomolekularvakuumpumpen (nicht dargestellt), die insbesondere größer sind als die hier dargestellte Pumpe, nicht möglich.

**In** den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

**In** dem Gehäuse 119 ist ein Rotor 149 angeordnet, der eine um eine Rotationsachse 151 drehbare Rotorwelle 153 aufweist. Die Rotationsachse 151 entspricht dabei einer Längsachse 151 des Rotors 149. Die Begriffe Rotationsachse 151 und Rotorlängsachse 151 werden im Folgenden synonym verwendet.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Es existieren andere Turbomolekularvakuumpumpen (nicht dargestellt), die keine Holweck-Pumpstufen aufweisen.

Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 167, 169 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Bei anderen existierenden Turbomolekularvakuumpumpen (nicht dargestellt) kann anstelle einer Spritzmutter eine Spritzschraube vorgesehen sein. Da somit unterschiedliche Ausführungen möglich sind, wird in diesem Zusammenhang auch der Begriff "Spritzspitze" verwendet.

Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 201 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, damit eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

Nachfolgend werden nun Vakuumpumpen 111 (Fig. 6 bis 8) bzw. ein eine Vakuumpumpe 111 sowie einen Rezipienten 225 umfassendes Vakuumsystem (Fig. 9) gemäß der Erfindung beschrieben.

Anders als bei der im Zusammenhang mit Fig. 1 bis 5 beschriebenen Vakuumpumpe 111 ist der Rotor 149 der in den Fig. 6 bis 9 gezeigten Vakuumpumpen 111 nicht mittels eines Wälzlagers 181 und eines Permanentmagnetlagers 183, sondern durch mehrere eine Lagereinheit 227 bildende elektromagnetische Lager 229a, 229b, 229c kontaktfrei gelagert.

Genauer gesagt ist der Rotor 149 der in den Fig. 6 bis 9 gezeigten Vakuumpumpen 111 entlang fünf Achsen elektromagnetisch gelagert. Ein erstes elektromagnetisches Lager 229a dient zur axialen Lagerung des Rotors 149 in Richtung dessen Längsachse 151. Ein zweites elektromagnetisches Lager 229b dient zur radialen Lagerung des Rotors 149 in einer ersten Ebene E₁ in Richtung zweier orthogonal zueinander sowie orthogonal zur Rotorlängsachse 151 ausgerichteter Achsen. Zusätzlich dient ein drittes elektromagnetisches Lager 229c zur radialen Lagerung des Rotors 149 in einer zweiten Ebene E₂ in Richtung zweier orthogonal zueinander sowie orthogonal zur Rotorlängsachse 151 ausgerichteter Achsen. Wie anhand von Fig. 6 bis 9 hervorgeht, ist die erste Ebene E₁ in Richtung der Rotorlängsachse 151 zu der zweiten Ebene E₂ parallel beabstandet. Wie außerdem anhand von Fig. 6 bis 9 zu sehen ist, ist die Rotorlängsachse 151 bzw. die Rotationsachse 151 orthogonal zu den beiden Ebenen E₁, E₂ ausgerichtet.

Die Lage sowie die Drehgeschwindigkeit des Rotors 149 werden durch gezieltes Bestromen der Spulen 231 der elektromagnetischen Lager 229a, 229b, 229c geregelt. Insbesondere halten die elektromagnetischen Lager 229a, 229b, 229c den Rotor 149 während des Betriebs der Vakuumpumpe 111 durch elektromagnetische Kräfte auf Abstand zum Stator 150.

Der Abstand zwischen dem Rotor 149 und dem Stator 150 wird mit Hilfe eines in den Figuren nicht weiter dargestellten Abstandssensors erfasst. Genauer gesagt wird der Abstand zwischen dem Rotor 149 und dem Stator 150, d.h. die Lage des Rotors 149 bezüglich des Stators 150 während des Betriebs der Vakuumpumpe 111 regelmäßig durch den Abstandssensor erfasst und durch eine mit dem Abstandssensor verbundene Steuereinheit 233 auf der Grundlage der vom Abstandssensor erfassten Abstandsmesswerte permanent nachgeregelt. Die dabei auf den Rotor 149 wirkenden elektromagnetischen Kräfte wirken aufgrund des Gegenwirkungsprinzips auch auf die restlichen Teile der Vakuumpumpe 11 und sind nach außen hin als unerwünschte Bewegung der Vakuumpumpe messbar.

Zur Messung der Bewegung der Vakuumpumpe 111 ist mindestens ein Bewegungssensor 235 vorgesehen, der auf der Grundlage der erfassten Bewegung der Vakuumpumpe 111 einen Bewegungsmesswert bereitstellt.

Der Bewegungssensor 235 ist insbesondere dazu ausgebildet, eine Auslenkungsstärke und/oder eine Bewegungsrichtung der Bewegung zu erfassen. Der Bewegungsmesswert beinhaltet somit die Auslenkungsstärke und/oder die Bewegungsrichtung.

Fig. 6 bis 9 zeigen verschiedene vorteilhafte Anbringungsorte für den Bewegungssensor 235.

Bei der in Fig. 6 dargestellten Vakuumpumpe 111 ist der Bewegungssensor 235 im Inneren der Vakuumpumpe 111 statorseitig möglichst nah am Rotor 149 angebracht. Durch die Nähe zum Rotor 149 kann der Bewegungssensor 235 die durch die Rückstellkräfte verursachten Bewegungen besonders gut erfassen.

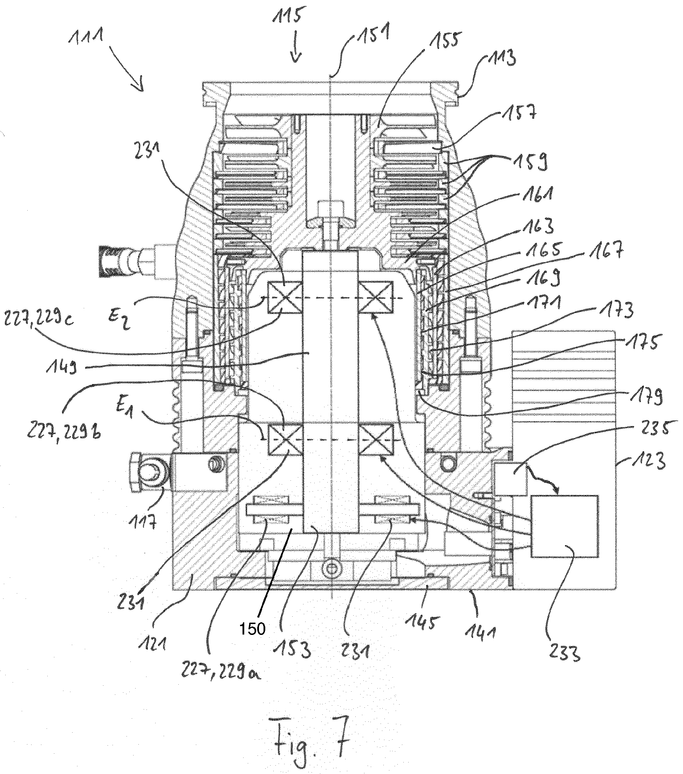

In Fig. 7 ist der Bewegungssensor 235 auf einer zwischen dem Elektronikgehäuse 123 und dem Gehäuse 119 angeordneten Platine (nicht gezeigt) angebracht. Insbesondere kann es sich hierbei um eine bereits vorhandene Platine handeln, die zum Beispiel die in dem Elektronikgehäuse 123 aufgenommene Steuerung 233 mit der Lagereinheit 227 elektrisch verbindet. Die Platine kann in eine Vakuumdurchführung integriert oder als Vakuumdurchführung ausgebildet sein. Vorteilhafterweise kann die Vakuumpumpe 111 unter Verwendung einer bereits vorhandenen Platine mit einem Bewegungssensor 235 nachgerüstet werden.

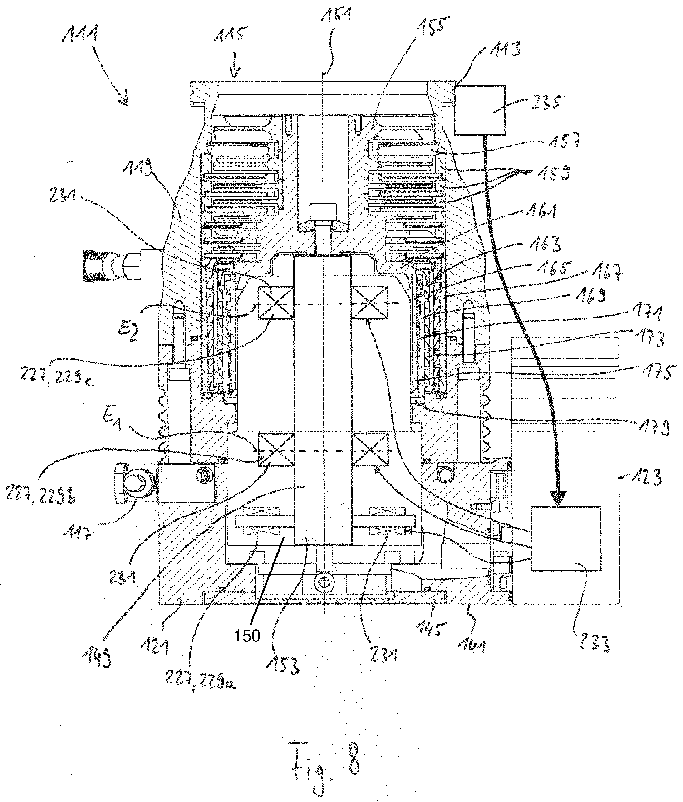

Da die Bewegungen der Vakuumpumpe 111 auf ein weiteres Vakuumgerät, wie zum Beispiel den Rezipienten 225, an einer Verbindungsstelle auf das Vakuumgerät übertragen werden, ist es besonders vorteilhaft, wenn die Bewegung der Vakuumpumpe an dieser Stelle erfasst werden, d.h. also noch bevor die Bewegungen auf das Vakuumgerät übertragen werden. **In** dem in Fig. 8 dargestellten Ausführungsbeispiel ist der Bewegungssensor 235 daher am Einlassflansch 113 der Vakuumpumpe 111 angebracht.

Des Weiteren kann der Bewegungssensor 235 in einem die Vakuumpumpe 111 und den Rezipienten 225 umfassenden Vakuumsystem auch an dem Rezipienten 225 angebracht oder anbringbar sein. Eine derartige Anbringung des Bewegungssensors 235 zeigt Fig. 9.

**In** all den in Fig. 6 bis 9 dargestellten Ausführungsbeispielen ist der Bewegungssensor 235 mit der Steuereinheit 233 kommunikationstechnisch verbunden. Genauer gesagt stellt der Bewegungssensor 235 der Steuereinheit 233 Bewegungsmesswerte auf der Grundlage der erfassten Bewegungen bereit. Dies ist in Fig. 6 bis 9 durch einen von dem Bewegungssensor 235 ausgehenden und auf die Steuereinheit 233 weisenden Pfeil schematisch dargestellt.

Die Steuereinheit 233 ergreift auf der Grundlage des von dem Bewegungssensor 235 bereitgestellten Bewegungsmesswerts sowie von dem von dem Abstandssensor bereitgestellten Abstandsmesswert eine die Bewegung der Vakuumpumpe 111 verringernde Maßnahme, was in Fig. 6 bis 9 durch die bei der Steuereinheit 233 beginnenden und bei den Lagern 229a, 229b, 229c endenden Pfeile schematisch dargestellt ist.

Eine Maßnahme der Steuereinheit 233 besteht erfindungsgemäß in der Veränderung der Drehgeschwindigkeit des Rotors 149. Zusätzlich oder alternativ kann die Steuereinheit 233 den Rotor 149 in eine laufruhige Normallage oder zumindest in einen die Normallage beinhaltenden Toleranzbereich zurückführen.

Eine Bewegungsminimierung kann beispielsweise dadurch erreicht werden, dass der Bewegungsmesswert wiederholt erfasst und mit einem vorgebbaren Maximalbewegungswert verglichen wird. Gleichzeitig kann zusätzlich noch der Abstandsmesswert wiederholt erfasst und mit einem die Normallage des Rotors 149 repräsentierenden Referenzabstandswert verglichen werden. Mindestens eine der Maßnahmen wird so lange ergriffen, d.h. fortgeführt, bis der Bewegungsmesswert geringer ist als der Maximalbewegungswert und/oder bis der erfasste Abstandsmesswert näher an dem Referenzabstandswert liegt als ein zuvor erfasster Abstandsmesswert oder der erfasste Abstandsmesswert bestenfalls dem Referenzabstandswert entspricht. Da der Rotor 149 durch dieses Verfahren seine Normallage nach Möglichkeit gar nicht erst verlässt, sind kaum oder bestenfalls keine Rückstellkräfte zur Rückführung des Rotors 149 nötig, was sich insgesamt in einer besonders laufruhigen, d.h. bewegungsarmen Vakuumpumpe 111 bemerkbar macht.

Alternativ zu der eben beschriebenen Bewegungsminimierung kann die Bewegung der Vakuumpumpe 111 auch dadurch minimiert werden, dass der Bewegungsmesswert ebenso wie beim eben beschriebenen Verfahren wiederholt erfasst und mit einem vorgebbaren Maximalbewegungswert verglichen wird. Anders als beim zuvor beschrieben Verfahren wird der Rotor 149 jedoch nicht zwangsweise in dessen Normallage zurückgeführt. Vielmehr lässt die Steuereinheit 233 eine stärkere Abweichung des Rotors 149 von dessen Normallage innerhalb eines zwischen einem minimal zulässigen Abstandswert und einem maximal zulässigen Abstandswert liegenden Toleranzbereichs zu. Hierdurch sind die Lager 229a, 229b, 229c weniger aktiv, wodurch weniger Rückstellkräfte auf den Rotor und die restlichen Teile, insbesondere auf das Gehäuse 119 der Vakuumpumpe 111 wirken, so dass die Bewegung der Vakuumpumpe 111 insgesamt geringer ist.

Bei diesem Verfahren dient der Abstandssensor zur Überwachung, dass der Rotor den Toleranzbereich nicht verlässt. Zu diesem Zweck wird der Abstandsmesswert wiederholt erfasst und mit dem minimalen Abstandswert und/oder dem maximalen Abstandswert verglichen. Droht der Rotor 149 den Toleranzbereich zu verlassen, d.h. bei Erreichen oder Unterschreiten des minimalen Abstandswertes bzw. bei Erreichen oder Überschreiten des maximalen Abstandswertes, wird die Maßnahme nur noch auf der Grundlage des Abstandswertes ergriffen. Dabei besteht die Maßnahme insbesondere darin, den Rotor 149 zum Schutz der Vakuumpumpe 111 wieder in seine Normallage zurückzuführen.

Gemäß einer weiteren vorteilhaften Ausgestaltung kann auf der Grundlage der erfassten Bewegungsrichtung eine Maßnahme darin bestehen, durch Auslenkung des Rotors 149 eine zur erfassten Bewegungsrichtung gegenläufige Bewegung der Vakuumpumpe 111 hervorzurufen. Die hervorgerufene gegenläufige Bewegung weist idealerweise eine gleich große Auslenkungsstärke auf wie die erfasste Bewegungsstärke. Insgesamt kann dann durch die Gegenbewegung infolge der gezielten Auslenkung des Rotors 149 die Bewegung der Vakuumpumpe 111 verringert oder vollständig neutralisiert werden.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 150: Stator
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung
- 225: Rezipient
- 227: Lagereinheit
- 229a, 229b, 229c: elektromagnetisches Lager
- 231: Spule
- 233: Steuereinheit
- 235: Bewegungssensor

## Patentansprüche

1. Vakuumpumpe (111), insbesondere Turbomolekular-Vakuumpumpe (111), mit:
- einem Stator (150),
- einem bezüglich des Stators (150) um eine Rotationsachse (151) drehbaren Rotor (149),
- einer Lagereinheit (227) mit mindestens einem elektromagnetischen Lager (229a, 229b, 229c) zur kontaktfreien Drehlagerung des Rotors (149) bezüglich des Stators (150),
- mindestens einem Abstandssensor, der dazu ausgebildet ist, während des Betriebs einen Abstand zwischen dem Rotor (149) und dem Stator (150) zu messen, und
- einer Steuereinheit (233), die dazu ausgebildet ist, auf der Grundlage eines von dem Abstandssensor bereitgestellten Abstandsmesswerts eine Maßnahme zu ergreifen,
wobei die Vakuumpumpe (111) mindestens einen Bewegungssensor (235), insbesondere Beschleunigungssensor oder Drehratensensor, umfasst, der dazu ausgebildet ist, eine Bewegung der Vakuumpumpe (111), insbesondere Schwingungen, zu erfassen und wenigstens einen auf der erfassten Bewegung basierenden Bewegungsmesswert bereitzustellen, und
wobei die Steuereinheit (233) ferner dazu ausgebildet ist, bei der Ergreifung der Maßnahme den von dem Bewegungssensor (235) bereitgestellten Bewegungsmesswert zu berücksichtigen,
**dadurch gekennzeichnet, dass** eine Maßnahme darin besteht, eine Drehgeschwindigkeit des Rotors (149) zu ändern.

2. Vakuumpumpe (111) nach Anspruch 1,
wobei eine Maßnahme darin besteht, den Rotor (149) in seine Normallage zurückzuführen, wobei die Rückführung des Rotors (149) in dessen Normallage durch Minimierung des Bewegungsmesswerts erfolgt.

3. Vakuumpumpe (111) nach Anspruch 1,
wobei eine Maßnahme darin besteht, zur Verringerung der Bewegung der Vakuumpumpe (111) eine Abweichung des Rotors von dessen Normallage zuzulassen.

4. Vakuumpumpe (111) nach Anspruch 1,
wobei der Bewegungsmesswert eine Bewegungsrichtung der Vakuumpumpe beinhaltet und eine Maßnahme darin besteht, durch Auslenkung des Rotors (149) eine zur erfassten Bewegungsrichtung gegenläufige Bewegung der Vakuumpumpe (111) hervorzurufen.

5. Vakuumpumpe (111) nach einem der vorstehenden Ansprüche,
wobei der Bewegungssensor (235) an der Vakuumpumpe (111), insbesondere an einer Verbindungsstelle zu einem weiteren Vakuumgerät, angebracht oder anbringbar ist.

6. Vakuumsystem mit einer Vakuumpumpe (111) nach einem der vorstehenden Ansprüche und einem Vakuumgerät, wobei die Vakuumpumpe (111) mit dem Vakuumgerät vakuumtechnisch verbunden ist und der Bewegungssensor (235) an dem Vakuumgerät angebracht oder anbringbar ist.

7. Verfahren zum Betreiben einer Vakuumpumpe (111), insbesondere nach einem der Ansprüche 1 bis 5, oder zum Betreiben eines die Vakuumpumpe (111) sowie ein Vakuumgerät umfassenden Vakuumsystems, insbesondere nach Anspruch 6,
wobei die Vakuumpumpe (111) umfasst: einen Stator (150), einen um eine Rotationsachse (151) drehbaren Rotor (149), eine Lagereinheit (227) mit mindestens einem elektromagnetischen Lager (229a, 229b, 229c) zur kontaktfreien Drehlagerung des Rotors (149) bezüglich des Stators (150), mindestens einen Abstandssensor zur Messung eines Abstands zwischen dem Rotor (149) und dem Stator (150) während des Betriebs, und eine Steuereinheit (233),
wobei die Vakuumpumpe (111) oder das Vakuumgerät einen Bewegungssensor (235), insbesondere Beschleunigungssensor oder Drehratensensor, umfasst, mit dem eine Bewegung der Vakuumpumpe (111) oder einer durch die Vakuumpumpe (111) hervorgerufene Bewegung des Vakuumgeräts erfasst wird,
wobei das Verfahren umfasst:
- Bereitstellen eines Abstandsmesswerts durch den Abstandssensor,
- Bereitstellen zumindest eines Bewegungsmesswerts durch den Bewegungssensor (235), und
- Ergreifen einer Maßnahme durch die Steuereinheit (233) auf der Grundlage des Abstandsmesswerts und unter Berücksichtigung des Bewegungsmesswerts,
**dadurch gekennzeichnet, dass** die Maßnahme das Ändern der Drehgeschwindigkeit des Rotors (149) umfasst.

8. Verfahren nach Anspruch 7,
wobei die Maßnahme umfasst:
- Zurückführen des Rotors (149) in eine Normallage.

9. Verfahren nach Anspruch 7 oder 8, ferner umfassend:
- wiederholtes Erfassen des Bewegungsmesswerte,
- Vergleichen des erfassten Bewegungsmesswerts mit einem vorgebbaren Maximalbewegungswert, und
- Fortführen der Maßnahme, bis der erfasste Bewegungsmesswert den Maximalbewegungswert erreicht oder unterschreitet.

10. Verfahren nach Anspruch 9, ferner umfassend:
- wiederholtes Erfassen des Abstandsmesswerts,
- Vergleichen des erfassten Abstandsmesswerts mit einem eine Normallage des Rotors (149) repräsentierenden Referenzabstandswertes, und
- Fortführen der Maßnahme, bis der erfasste Abstandsmesswert näher an dem Referenzabstandswert liegt als ein zuvor erfasster Abstandsmesswert oder bis der erfasste Abstandsmesswert dem Referenzabstandswert entspricht.

11. Verfahren nach Anspruch 9, ferner umfassend:
- wiederholtes Erfassen des Abstandsmesswerts,
- Vergleichen des erfassten Abstandsmesswerts mit einem minimalen Abstandswert und/oder einem maximalen Abstandswert, und
- Ergreifen der Maßnahme nur auf der Grundlage des Abstandsmesswerts bei Erreichen oder Unterschreiten des minimalen Abstandswerts bzw. bei Erreichen oder Überschreiten des maximalen Abstandswertes.

12. Verfahren nach Anspruch 7, umfassend:
- Erfassen einer Bewegungsrichtung mittels des Bewegungssensors (235), und
- Auslenken des Rotors (149) derart, dass eine zur erfassten Bewegungsrichtung gegenläufige Bewegung der Vakuumpumpe (111) hervorgerufen wird.

## Claims

1. A vacuum pump (111), in particular a turbomolecular vacuum pump (111), comprising:
- a stator (150),
- a rotor (149) which is rotatable with respect to the stator (150) about an axis of rotation (151),
- a bearing unit (227) having at least one electromagnetic bearing (229a, 229b, 229c) for a contact-free rotational support of the rotor (149) with respect to the stator (150),
- at least one distance sensor which is configured to measure a distance between the rotor (149) and the stator (150) during operation, and
- a control unit (233) which is configured to take a measure based on a distance measurement value provided by the distance sensor,
wherein the vacuum pump (111) comprises at least one motion sensor (235), in particular an acceleration sensor or a rotational rate sensor, which is configured to detect a movement of the vacuum pump (111), in particular vibrations, and to provide at least one movement measurement value based on the detected movement, and
wherein the control unit (233) is further configured to take into account the movement measurement value which is provided by the motion sensor (235) when taking the measure,
**characterized in that** a measure consists of changing a rotational speed of the rotor (149).

2. A vacuum pump (111) according to claim 1,
wherein a measure consists of returning the rotor (149) to its normal position, wherein the return of the rotor (149) to its normal position takes place by minimizing the movement measurement value.

3. A vacuum pump (111) according to claim 1,
wherein a measure consists of allowing a deviation of the rotor from its normal position in order to reduce the movement of the vacuum pump (111).

4. A vacuum pump (111) according to claim 1,
wherein the movement measurement value includes a direction of movement of the vacuum pump and a measure consists of causing a movement of the vacuum pump (111) opposite to the detected direction of movement by deflecting the rotor (149).

5. A vacuum pump (111) according to any one of the preceding claims,
wherein the motion sensor (235) is attached or attachable to the vacuum pump (111), in particular to a connection point to a further vacuum device.

6. A vacuum system comprising a vacuum pump (111) according to any one of the preceding claims and a vacuum device, wherein the vacuum pump (111) is connected in terms of vacuum to the vacuum device and the motion sensor (235) is attached or attachable to the vacuum device.

7. A method for operating a vacuum pump (111), in particular according to any one of the claims 1 to 5, or for operating a vacuum system comprising the vacuum pump (111) and a vacuum device, in particular according to claim 6,
wherein the vacuum pump (111) comprises: a stator (150), a rotor (149) rotatable about an axis of rotation (151), a bearing unit (227) having at least one electromagnetic bearing (229a, 229b, 229c) for a contact-free rotational support of the rotor (149) with respect to the stator (150), at least one distance sensor for measuring a distance between the rotor (149) and the stator (150) during operation, and a control unit (233),
wherein the vacuum pump (111) or the vacuum device comprises a motion sensor (235), in particular an acceleration sensor or a rotational rate sensor, with which a movement of the vacuum pump (111) or a movement of the vacuum device that is caused by the vacuum pump (111) is detected,
wherein the method comprises:
- providing a distance measurement value by means of the distance sensor,
- providing at least one movement measurement value by means of the motion sensor (235), and
- taking a measure by means of the control unit (233) based on the distance measurement value and taking into account the movement measurement value,
**characterized in that** the measure comprises changing the rotational speed of the rotor (149).

8. A method according to claim 7,
wherein the measure comprises:
- returning the rotor (149) to a normal position.

9. A method according to claim 7 or 8, further comprising:
- repeatedly acquiring the movement measurement values,
- comparing the acquired movement measurement value with a predefinable maximum movement value, and
- continuing the measure until the acquired movement measurement value reaches or falls below the maximum movement value.

10. A method according to claim 9, further comprising:
- repeatedly acquiring the distance measurement value,
- comparing the acquired distance measurement value with a reference distance value representing a normal position of the rotor (149), and
- continuing the measure until the acquired distance measurement value is closer to the reference distance value than a previously acquired distance measurement value or until the acquired distance measurement value corresponds to the reference distance value.

11. A method according to claim 9, further comprising:
- repeatedly acquiring the distance measurement value,
- comparing the acquired distance measurement value with a minimum distance value and/or a maximum distance value, and
- taking the measure based solely on the distance measurement value when reaching or falling below the minimum distance value or when reaching or exceeding the maximum distance value.

12. A method according to claim 7, comprising:
- detecting a direction of movement by means of the motion sensor (235), and
- deflecting the rotor (149) such that a movement of the vacuum pump (111) opposite to the detected direction of movement is caused.

## Revendications

1. Pompe à vide (111), en particulier pompe à vide turbomoléculaire (111), comprenant :
- un stator (150),
- un rotor pouvant tourner par rapport au stator (150) autour d'un axe de rotation (151),
- une unité de palier (227) comprenant au moins un palier électromagnétique (229a, 229b, 229c) destiné à assurer le support en rotation sans contact du rotor (149) par rapport au stator (150),
- au moins un capteur de distance conçu pour mesurer, pendant le fonctionnement, une distance entre le rotor (149) et le stator (150), et
- une unité de commande (233) conçue pour prendre une mesure sur la base d'une valeur de mesure de distance fournie par le capteur de distance,
dans laquelle la pompe à vide (111) comprend au moins un capteur de mouvement (235), en particulier un capteur d'accélération ou un capteur de vitesse de rotation, conçu pour détecter un mouvement de la pompe à vide (111), en particulier des vibrations, et pour fournir au moins une valeur de mesure de mouvement basée sur le mouvement détecté, et
dans laquelle l'unité de commande (233) est en outre conçue pour prendre en compte, lors de la mise en œuvre de la mesure, la valeur de mesure de mouvement fournie par le capteur de mouvement (235),
**caractérisé en ce qu'**une mesure consiste à modifier une vitesse de rotation du rotor (149).

2. Pompe à vide (111) selon la revendication 1,
dans laquelle une mesure consiste à ramener le rotor (149) dans sa position normale, le retour du rotor (149) dans sa position normale s'effectuant par minimisation de la valeur de mesure de mouvement.

3. Pompe à vide (111) selon la revendication 1,
dans laquelle une mesure consiste à autoriser un écart du rotor par rapport à sa position normale afin de réduire le mouvement de la pompe à vide (111).

4. Pompe à vide (111) selon la revendication 1,
dans laquelle la valeur de mesure de mouvement comprend une direction de mouvement de la pompe à vide et une mesure consiste à provoquer, par déviation du rotor (149), un mouvement de la pompe à vide (111) opposé à la direction de mouvement détectée.

5. Pompe à vide (111) selon l'une des revendications précédentes,
dans laquelle le capteur de mouvement (235) est monté ou peut être monté sur la pompe à vide (111), en particulier au niveau d'un point de raccordement à un autre appareil à vide.

6. Système de vide comprenant une pompe à vide (111) selon l'une des revendications précédentes et un appareil à vide, la pompe à vide (111) étant reliée à l'appareil à vide par un circuit de vide et le capteur de mouvement (235) étant monté ou pouvant être monté sur l'appareil à vide.

7. Procédé de fonctionnement d'une pompe à vide (111), notamment selon l'une des revendications 1 à 5, ou de fonctionnement d'un système de vide comprenant la pompe à vide (111) ainsi qu'un appareil à vide, notamment selon la revendication 6,
dans laquelle la pompe à vide (111) comprend : un stator (150), un rotor (149) pouvant tourner autour d'un axe de rotation (151), une unité de palier (227) comportant au moins un palier électromagnétique (229a, 229b, 229c) pour le support en rotation sans contact du rotor (149) par rapport au stator (150), au moins un capteur de distance pour mesurer une distance entre le rotor (149) et le stator (150) pendant le fonctionnement, et une unité de commande (233),
dans laquelle la pompe à vide (111) ou l'appareil à vide comprend un capteur de mouvement (235), notamment un capteur d'accélération ou un capteur de vitesse de rotation, permettant de détecter un mouvement de la pompe à vide (111) ou un mouvement de l'appareil à vide provoqué par la pompe à vide (111), le procédé comprenant les étapes consistant à :
- fournir une valeur de mesure de distance via le capteur de distance,
- fournir au moins une valeur de mesure de mouvement via le capteur de mouvement (235), et
- prendre une mesure via l'unité de commande (233) sur la base de la valeur de mesure de distance et en tenant compte de la valeur de mesure de mouvement,
**caractérisé en ce que** la mesure comprend de modifier la vitesse de rotation du rotor (149).

8. Procédé selon la revendication 7,
dans lequel la mesure comprend :
- de ramener le rotor (149) dans une position normale.

9. Procédé selon la revendication 7 ou 8, comprenant en outre les étapes consistant à :
- détecter de manière répétée la valeur de mesure de mouvement,
- comparer la valeur de mesure de mouvement à une valeur de mouvement maximale pouvant être prédéfinie, et
- poursuivre la mesure jusqu'à ce que la valeur de mesure de mouvement détectée atteigne ou passe en dessous de la valeur maximale de mouvement.

10. Procédé selon la revendication 9, comprenant en outre les étapes consistant à :
- détecter de manière répétée la valeur de mesure de distance,
- comparer la valeur de mesure de distance détectée à une valeur de distance de référence représentant une position normale du rotor (149), et
- poursuivre la mesure jusqu'à ce que la valeur de mesure de distance détectée soit plus proche de la valeur de distance de référence qu'une valeur de mesure de distance précédemment détectée, ou jusqu'à ce que la valeur de mesure de distance corresponde à la valeur de distance de référence.

11. Procédé selon la revendication 9, comprenant en outre les étapes consistant à :
- détecter de manière répétée de la valeur de mesure de distance,
- comparer la valeur de mesure de distance détectée à une valeur de distance minimale et/ou une valeur de distance maximale, et
- prendre la mesure uniquement sur la base de la valeur de mesure de distance détectée lorsque celle-ci atteint ou passe en dessous de la valeur minimale, ou lorsqu'elle atteint ou dépasse la valeur maximale.

12. Procédé selon la revendication 7, comprenant les étapes consistant à :
- détecter une direction de mouvement à l'aide du capteur de mouvement (235), et
- effectuer une déviation du rotor (149) de manière à provoquer un mouvement de la pompe à vide (111) dans le sens opposé à la direction de mouvement détectée.
